# EUROPEAN PATENT SPECIFICATION

(11) **EP 3 102 320 B1**
(45) Date of publication and mention of the grant of the patent: **18.05.2022**
(21) Application number: 15703813.4
(22) Date of filing: 04.02.2015
(51) Int. Cl.: B01J 19/00, B01J 19/12

(54) **PHOTOCHEMICAL REACTOR**
FOTOCHEMISCHER REAKTOR
RÉACTEUR PHOTOCHIMIQUE

(30) Priority: 04.02.2014 GB 201401890; 06.06.2014 GB 201410109
(43) Date of publication of application: 14.12.2016
(73) Proprietor: Vapourtec Limited, Suffolk IP28 6TS (GB)
(72) Inventor: GUTHRIE, Duncan, Bury St Edmunds Suffolk IP28 6TS (GB)
(74) Representative: J A Kemp LLP
(86) International application number: PCT/GB2015/050290
(87) International publication number: WO 2015/118317

(56) References cited:
- WO-A1-2013/030247
- GB-A- 2 248 835
- JP-A- 2007 075 682
- US-A- 4 087 342
- US-B1- 7 205 444
- US-B1- 7 875 248

## Description

The present invention relates to a photochemical reactor. It is particularly, but not exclusively concerned with a photochemical reactor for use in flow chemistry in which the light source and the reactor chamber are isolated from each other and separately cooled.

Photochemistry, the use of light to effect chemical reactions, has a number of important applications both in nature, such as photosynthesis and vitamin D formation, and in industry. One such potential industrial application is the synthesis of the current most effective malaria therapy, artemisinin as described by F. Lévesque and P H Seeberger in Agnew Chem. Int. Ed. 2012 DOE: 10.1002/anie.201107446. Artemisinin is impractical to synthesize from scratch but using photochemical reactions, it can be synthesized from artemisinic acid, a by-product of the procedure used to extract artemisinin from sweet wormwood plants. The key stage is a reaction with a singlet oxygen molecule which can only be produced by a photochemical reaction.

In modern synthetic chemistry, photochemistry has fallen out of favour. This is because in batch use it has several problems. It is difficult to scale up a photochemical batch reaction, since the (typically UV) light can only cause reactions within a certain range and it can be difficult to ensure that all of the reactants are exposed to sufficient quantity of radiation to ensure complete reaction. This also results in less finely tuned control of the reactions.

It has recently started to become recognised that a flow chemistry approach to photochemical reactions may provide several advantages over the batch reactions discussed above. Flow photochemistry involves allowing the reactants constantly to move along a tube, or channel which is exposed to the light source. A known advantage of flow chemistry is that by controlling the flow rate of the reactants, a greater control of the reaction rate, volume and temperature at which the reaction occurs can be achieved. Furthermore, in flow chemistry, a narrow reactor tubing can be used which can mean that all of the reactant across a diameter of the tubing gets exposure to the light (due to the increased surface area to volume ratio of the reactor), and not just that within a small radius of the light, also resulting in a greater photonic efficiency.

Bachollet et al. in Microflow photochemistry: UVC-induced [2 + 2]-photoadditions to furanone in a microcapillary reactor, Beilstein J. Org. Chem. 2013, 9, 2015-2021 showed that using a flow chemistry approach can vastly increase the conversion rate and product quality of [2+2]-photoadditions to furanone.

In reactions where synthesis of unstable species is required in order to synthesize a second species, using flow chemistry can allow this second synthesis to occur quickly, and in a controlled manner. In a batch reaction, the unstable species may decompose or react undesirably before it can be harvested for further reactions. Swift removal of the products once the reaction has occurred can also prevent unwanted decomposition or secondary reactions occurring.

The majority of photochemical reactions rely on light in the UV region, with wavelengths between 200 and 400nm. Some catalysed reactions can occur using light from the visible region of the electromagnetic spectrum.

The ideal light source for photochemical reactions is one which emits a broad spectrum of wavelengths between 200nm and 400nm, since the exact wavelength required to get the maximum output from the reaction is rarely known. However, in most lamps (e.g. medium-pressure (1-10 atm) and high-pressure (>10 atm) mercury vapour lamps) only 10-15% of the energy emitted is in this range, the vast majority being emitted as heat (i.e. infrared radiation). This results in not only the light source becoming very hot, but significant heat transfer to the surrounding area, which will typically include the reactor. Such heat transfer has several disadvantages in flow chemistry. Higher temperatures can often allow one or more unwanted side-reactions to occur, reducing the yield of the desired product. If these side-reactions are polymerisation reactions, resulting in solid products, the tubes in which the reactions are taking place can easily become clogged and need replacing.

LEDs can be used to generate a much "cooler" light, with typically no infra-red or visible emissions from a UV LED. However, LEDs normally only emit at a very specific wavelength, which is often not the wavelength required to drive the reaction desired. Even if an LED emitting at a suitable frequency for a particular reaction was available, its utility would be limited to that reaction. LEDs also generally emit much lower intensities of radiation (particularly compared to discharge lamps) and so cannot synthesise reactions on a sufficient scale or at a sufficient rate. As a result, LED light sources are not particularly useful in practical photochemistry.

As a result of the above considerations, in known flow photochemical reaction set ups, a trade-off is made when choosing the distance of the reaction vessel from the light source. Too near, and the temperature will be too high; too far, and the intensity of the UV radiation reaching the reaction vessel will be too low to cause sufficient reactions.

To improve this situation, cooling systems are employed to keep the temperature of the reaction vessel down while allowing it to sit near the light source.

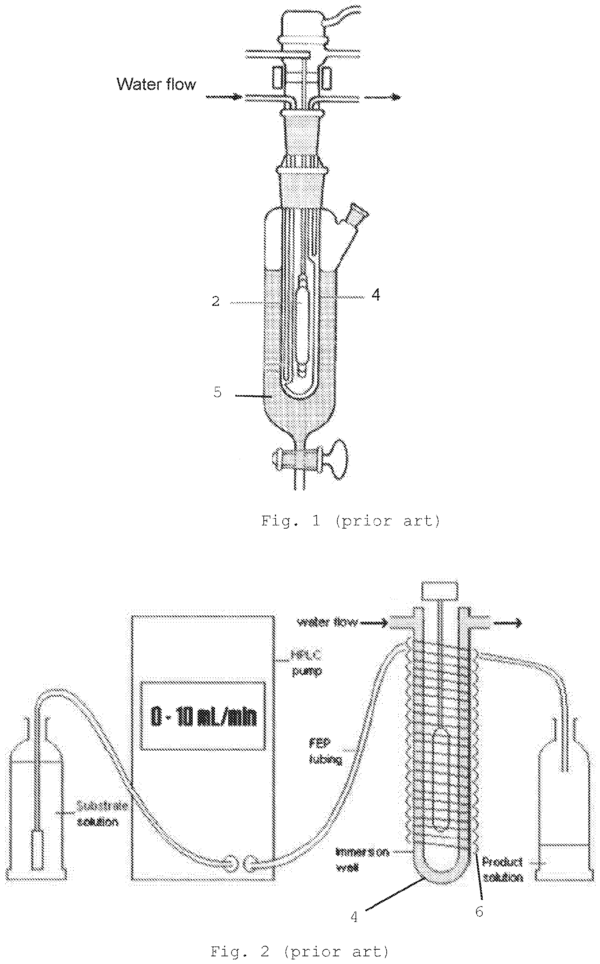

Fig. 1 shows a typical batch setup in which a lamp 2 is placed in the centre of the water-cooling jacket 4 through which a continuous flow of water is passed and the reaction takes place in a reactor vessel 5 surrounding the water-cooling jacket.

A flow chemistry development of this type of reactor is shown in Fig. 2, which shows the same setup, except the reaction takes place in the coiled FEP tubing 6 outside the water cooling jacket 4. Often, with water-cooled reactors like those shown in Figs. 1 and 2, IR absorbers will also be added to the water in order to further reduce the temperature transmitted to the reactor vessel.

Another water-cooled system uses a block of quartz with microchannels etched into it as the reaction vessel. Channels of water can be run above and below these, in order to cool the reaction taking place within. The block is then irradiated from above and below. However, such devices are expensive to produce, and are particularly susceptible to clogging due to the especially narrow channels. Furthermore, typically only -40% of the area of the quartz can be filled with microchannels and therefore a large block is required for practical purposes.

Although these solutions overcome some of the problems identified above, they are far from perfect. The cooling water will still conduct some of the heat from the lamp across to the reactants. It will also absorb a small amount of the UV light emitted from the lamp.

The setup proposed by Bachollet et al. in the above mentioned reference uses a ring of eight 4W UVC lamps surrounding a chamber reactor. An integrated fan is used to cool this reactor so that temperatures did not exceed 30°C. The cooling air was blown up the centre of the reaction vessel. However, as this was not a closed system, no accurate temperature control was provided. Moreover, the lamps used here are low power, low intensity (compared to a medium or high pressure discharge lamp) low pressure discharge lamps, commonly named fluorescent lamps.

An aim of the present invention is to provide a photochemical reactor in which the temperature of the reactor can be controlled independently of the cooling of the lamp. Preferably the photochemical reactor provides good thermal separation between the lamp and the reactor.

A further aim of the present invention is to provide a photochemical reactor which allows for accurate temperature control of the reactor, while maximizing the intensity of the UV radiation incident upon the reaction mixture.

chambers isolated from each other; and a reaction vessel into which the UV lamp unit is inserted.

US 4,087,342A describes a photochemical reaction system in which a single polychromatic light source is used to simultaneously irradiate a plurality of photochemical reactions with different regions of the spectrum. Reactions are carried out in separate but adjacent chambers which are accessible to a single polychromatic light source and positioned in series so that each reaction provides a filter for the next adjacent reaction more remote from the source.

US 7,875,248B discloses a tube reactor having a substantially tubular body portion including a conical section, an entry port, an opposing exit port, and an axis extending between the ports through the body portion. The tubular body portion being rotatable about the axis. At least one reactant can be fed into the tubular body portion and directed toward the conical section. An inner surface of the tubular body portion receives the reactants from the conical section, and processes the reactants. An insert may be positioned within the tubular body portion to further process the reactants along the inner surface. A rotating reservoir having a damper can be coupled to the rotating tubular body portion. The damper receives the processed reactants from the inner surface of the tubular body portion, and guides the processed reactants into the rotating reservoir to minimize turbulence. The rotating reservoir then separates the processed reactants by density.

US 7,205,444B discloses a continuous, vapor phase method for purifying a crude mixture of 1 ,1 ,1 ,3,3,3-hexafluoropropane and one or more unsaturated fluorocarbon compounds, the process comprising: a) providing a photochlorinator vessel comprising : 1) a UV lamp unit comprising a UV lamp located in a transparent inner well, the transparent inner well being located within a transparent outer well, the outer well being provided with material for cooling walls of the inner and outer wells; the inner well and the outer well defining separate chambers isolated from each other; and 2) a reaction vessel into which the UV lamp unit has been inserted; b) introducing into the reaction vessel a gaseous mixture of Cb and a distillation inseparable mixture of 1 ,1 ,1,3,3,3-hexafluoropropane and one or more unsaturated fluorocarbon compdunds; c) reacting, in the gaseous state and in the presence of UV light from the photochlorinator, the mixture with CI2 with the distillation inseparable mixture of 1 ,1 ,1 ,3,3,3-hexafluoropropane and one or more unsaturated compounds to saturate unsaturated fluorocarbons into a reacted mixture, and d) separating a purified 1 , 1 ,1 , 3,3, 3-hexafluoroporpane product containing less than 1000 ppm, most preferably less than 100 ppm unsaturated fluorocarbons.

WO 2013/030247A discloses a method for producing artemisinin from dihydroartennisinic acid in a continuous flow reactor using singlet oxygen as well as to the continuous flow reactor for producing artemisinin.

GB 2,248,835A discloses a process and apparatus for preparing 1,1,1,-Trichloroethane by photochlorination of 1,1-dichloroethane with chlorine in gaseous phase at a pressure of from 0.1 to 0.9 bar.

JP 2007-075682A discloses a continuous flow photochemical reaction apparatus which is provided with: a reaction part to be formed from a light-transmissive flow passage; a liquid supply part for supplying a substance to be reacted to the reaction part; a light source part having at least one light source for emitting light toward the reaction part to cause the photochemical reaction in the substance to be reacted in the light-transmissive flow passage; and a recovery part for recovering a photochemical reaction product produced by the photochemical reaction. The reaction part is unitized as one unit, which is then fit detachably to the light source part and integrated with the light source part.

An aim of the present invention is to provide a photochemical reactor in which the temperature of the reactor can be controlled independently of the cooling of the lamp. Preferably the photochemical reactor provides good thermal separation between the lamp and the reactor.

A further aim of the present invention is to provide a photochemical reactor which allows for accurate temperature control of the reactor, while maximizing the intensity of the UV radiation incident upon the reaction mixture.

A first aspect of the present invention provides a device for carrying out a photochemical reaction according to claim 1.

The separation of the reactor chamber from the lamp chamber means that separate cooling/temperature control processes can be implemented for each of these chambers. This can allow the temperature of the reactor chamber to be closely controlled to provide for the preferred reaction temperature, despite the close presence of the light source and the heat emitted from it. Preferably the temperature of the reactor chamber and the reactor can be controlled by controlling the gas flow or the temperature of gas flowing through the reactor chamber. At the same time a constant flow of cooling air can be passed through the lamp chamber to cool the light source and dissipate some of the heat emitted by the light source.

Preferably the gas flows through the lamp chamber and the reactor chamber do not mix at any point in the device. This ensures that separation of the cooling/temperature control processes is provided for.

In the present invention, the term translucent is to be interpreted as meaning that the item transmits (i.e. does not absorb) at least a portion of the ultraviolet or visible spectrum of radiation. Preferably the components indicated as being translucent are substantially or wholly transparent to a substantial portion of, or the whole of, the ultraviolet and/or visible spectrum.

Preferably said reactor unit is removable from the device. This allows the reactor unit to be interchanged, for example where it is desired to use a reactor of a different volume, or if the reactor becomes blocked and needs to be cleaned or replaced.

The lamp chamber may be further arranged to receive a removable filter assembly having a least one filter element.

Where provision is made for a filter assembly to be present, the first gas inlet may include a plurality of ports such that, when said removable filter assembly is present, gas which is fed into the lamp chamber is fed by said ports into regions on both sides of said filter element. This arrangement can ensure that the two sides of the filter elements are maintained at the same temperature and so there is no thermal stress in the filter elements.

The filter assembly preferably includes a plurality of planar filter elements, typically at least three, arranged in a cage structure. For many substances which are used to form filter elements, it is very difficult to create and / or obtain non-planar structures.

Preferably the device also includes a casing. The casing can perform some or all of the following functions.

Preferably the inner surface of the casing is substantially reflective to ultraviolet radiation. This means that a significant portion, preferably substantially all, of the ultraviolet radiation from the light source reaching the casing is reflected back towards the centre of the device. This ensures that the ultraviolet radiation emitted from the light source continues to be reflected internally in the device until it is absorbed by the reactants in the reactor and so substantially all of the ultraviolet radiation is available for the reaction.

In certain embodiments, the inner surface of the casing may have a coating which is substantially reflective to ultraviolet radiation and substantially absorptive of visible and infra-red radiation. Preferably the coating reflects >80% of the energy in the wavelength range 200-450 nm, more preferably >90%. Preferably the coating absorbs >80% of the energy in the wavelength range 500-2000 nm, more preferably >90%.

The casing may also act as a heat sink. The material of the casing may be chosen such that it absorbs all, or a substantial portion of, the infra-red radiation incident on the inner surface of the casing. This will result in most or all of the infra-red radiation emitted by the light source only passing through the reactor chamber (and therefore the reactor) once before it is absorbed by the casing and dissipated to the outside of the device.

In order to improve the performance of the casing as a heat sink, the casing may have one or more fins arranged around the outer surface which increase the surface area of the casing and therefore the rate of heat dissipation.

Preferably the device also includes: a translucent second separator which is arranged to form a pocket between said second separator and the casing, wherein the second separator is situated between the reactor chamber and the casing. The pocket acts as an insulating layer between the casing and the reactor chamber and thereby significantly reduces or even prevents the heat of the casing (resulting from absorption of radiation from the light source) from being transmitted back to the reactor chamber. The pocket between the second separator and the casing is typically filled with air, and need not be completely airtight. Still-air is a poor conductor of heat from the casing and the second separator acts to reduce or eliminate convection of air from the pocket to the reactor chamber.

Preferably the first translucent separator and/or the second translucent separator are made of quartz glass. Quartz glass has a broad transmission spectrum in the UV range and so absorbs very little of the ultraviolet radiation from the light source, thereby allowing it to pass to the reactor chamber and the reactor (in the case of the first translucent separator) and to be reflected back into the reactor chamber by the casing (in the case of the second translucent separator).

Preferably the device also includes a temperature sensor arranged to measure the temperature of the reactor. The temperature sensor can be connected to a controller which controls the temperature and/or volume flow rate of gas flowing through the reactor chamber so as to keep the temperature of the reactor (and therefore of the reagents in it) at a carefully controlled temperature. This can assist in preventing unwanted alternative reactions or in increasing or maximising the yield of the reaction.

The device preferably also includes a shield arranged to block at least some of the radiation from the light source from reaching the temperature sensor. Preferably the shield is arranged to block infra red radiation. Preferably the shield is arranged to block radiation from reaching the temperature sensor directly from the lamp.

The device may also include a spectrometer arranged to measure the real-time spectral transmittance of one or more of the light source, the filter assembly, the reactor and reagents in the reactor, when those elements are present in the device. The inclusion of a spectrometer may allow the real-time photochemical reaction conditions in the reactor to be monitored and adjusted if desired.

The device may further include a light assembly housing said light source, wherein the device and the light assembly are arranged to interlock such that power can only be supplied to the light source if the light assembly is correctly positioned within the device. By providing an interlock mechanism, the light source can be prevented from illuminating except if the light assembly is correctly positioned in the device. This provides a safety feature allowing higher intensity light sources to be safely used as the device may ensure that the light source cannot illuminate when it is outside of the device and so cannot cause harm to someone viewing the light source.

In a preferred embodiment the light assembly has a switch controlling the light source, wherein the switch is activated when the light assembly is correctly positioned within the device. This switch arrangement provides for the interlocking of the device and light assembly. The switch may be a contact switch, a reed switch or any other known switch. Preferably the switch is connected to a relay which forms part of the electrical circuit supplying power to the light source, and therefore does not need to handle the currents and/or voltages required to power the light source.

In preferred embodiments, the light assembly includes a high-pressure or medium-pressure mercury vapour lamp as said light source. Mercury vapour discharge lamps provide for high intensity broad spectrum emission in the ultra-violet spectrum and so provide a significant number of photons which can be used by photochemical reactions.

The light source is preferably removable from the device so that it can be replaced or exchanged for an alternative light source.

The device of this aspect may include some, all or none of the above optional and preferred features in any combination.

The device of this aspect is preferably used in a method according to the third aspect of the invention described below, but is not limited to such use.

A second aspect not part of the present invention provides a kit of parts including: a device for carrying out a temperature-controlled photochemical reaction according to the above-described first aspect, including some, all or none of the optional and preferred features of that aspect in any combination and a light source.

The separation of the reactor chamber from the lamp chamber means that separate cooling/temperature control processes can be implemented for each of these chambers. This can allow the temperature of the reactor chamber to be closely controlled to provide for the preferred reaction temperature, despite the close presence of the light source and the heat emitted from it. Preferably the temperature of the reactor chamber and the reactor can be controlled by controlling the gas flow or the temperature of the gas flowing through the reactor chamber. At the same time a constant flow of cooling air can be passed through the lamp chamber to cool the light source and dissipate some of the heat emitted by the light source.

Preferably the gas flows through the lamp chamber and the reactor chamber do not mix at any point in the device. This ensures that separation of the cooling/temperature control processes is provided for.

In the present invention, the term translucent is to be interpreted as meaning that the item transmits (i.e. does not absorb) at least a portion of the ultraviolet or visible spectrum of radiation. Preferably the components indicated as being translucent are substantially or wholly transparent to a substantial portion of, or the whole of, the ultraviolet and/or visible spectrum.

In the kit of the present aspect, the reactor unit is provided separately from and is removable from the device. This allows the reactor unit to be interchanged, for example where it is desired to use a reactor of a different volume, or if the reactor becomes blocked and needs to be cleaned or replaced.

Preferably the kit further includes a removable filter assembly having a least one filter element.

Where provision is made for a filter assembly to be present, the first gas inlet may include a plurality of ports such that, when said removable filter assembly is present, gas which is fed into the lamp chamber is fed by said ports into regions on both sides of said filter element. This arrangement can ensure that the two sides of the filter elements are maintained at the same temperature and so there is no thermal stress in the filter elements.

The filter assembly preferably includes a plurality of planar filter elements, typically at least three, arranged in a cage structure. For many substances which are used to form filter elements, it is very difficult to create and / or obtain non-planar structures.

Preferably the device also includes a casing. The casing can perform some or all of the following functions.

Preferably the inner surface of the casing is substantially reflective to ultraviolet radiation. This means that a significant portion, preferably substantially all, of the ultraviolet radiation from the light source reaching the casing is reflected back towards the centre of the device. This ensures that the ultraviolet radiation emitted from the light source continues to be reflected internally in the device until it is absorbed by the reactants in the reactor and so substantially all of the ultraviolet radiation is available for the reaction.

In certain embodiments, the inner surface of the casing may have a coating which is substantially reflective to ultraviolet radiation and substantially absorptive of visible and infra-red radiation. Preferably the coating reflects >80% of the energy in the wavelength range 200-450 nm, more preferably >90%. Preferably the coating absorbs >80% of the energy in the wavelength range 500-2000 nm, more preferably >90%.The casing may also act as a heat sink. The material of the casing may be chosen such that it absorbs all, or a substantial portion of, the infra-red radiation incident on the inner surface of the casing. This will result in most or all of the infra-red radiation emitted by the light source only passing through the reactor chamber (and therefore the reactor) once before it is absorbed by the casing and dissipated to the outside of the device.

In order to improve the performance of the casing as a heat sink, the casing may have one or more fins arranged around the outer surface which increase the surface area of the casing and therefore the rate of heat dissipation.

Preferably the device also includes: a translucent second separator which is arranged to form a pocket between said second separator and the casing, wherein the second separator is situated between the reactor chamber and the casing. The pocket acts as an insulating layer between the casing and the reactor chamber and thereby significantly reduces or even prevents the heat of the casing (resulting from absorption of radiation from the light source) from being transmitted back to the reactor chamber. The pocket between the second separator and the casing is typically filled with air, and need not be completely airtight. Still-air is a poor conductor of heat from the casing and the second separator acts to reduce or eliminate convection of air from the pocket to the reactor chamber.

Preferably the first translucent separator and/or the second translucent separator are made of quartz glass. Quartz glass has a broad transmission spectrum in the UV range and so absorbs very little of the ultraviolet radiation from the light source, thereby allowing it to pass to the reactor chamber and the reactor (in the case of the first translucent separator) and to be reflected back into the reactor chamber by the casing (in the case of the second translucent separator).

Preferably the kit also includes a temperature sensor arranged to measure the temperature of the reactor. The temperature sensor can be connected to a controller which controls the temperature and/or volume of gas flowing through the reactor chamber so as to keep the temperature of the reactor (and therefore of the reagents in it) at a carefully controlled temperature. This can assist in preventing unwanted alternative reactions or in increasing or maximising the yield of the reaction.

The device preferably also includes a shield arranged to block at least some of the radiation from the light source from reaching the temperature sensor. Preferably the shield is arranged to block infra red radiation. Preferably the shield is arranged to block radiation from reaching the temperature sensor directly from the lamp.

The device may also include a spectrometer arranged to measure the real-time spectral transmittance of one or more of the light source, the filter assembly, the reactor and reagents in the reactor, when those elements are present in the device. The inclusion of a spectrometer may allow the real-time photochemical reaction conditions in the reactor to be monitored and adjusted if desired.

The kit may further include a light assembly housing said light source, wherein the device and the light assembly are arranged to interlock such that power can only be supplied to the light source if the light assembly is correctly positioned within the device. By providing an interlock mechanism, the light source can be prevented from illuminating except if the light assembly is correctly positioned in the device. This provides a safety feature allowing higher intensity light sources to be safely used as the device may ensure that the light source cannot illuminate when it is outside of the device and so cannot cause harm to someone viewing the light source.

In a preferred embodiment the light assembly has a switch controlling the light source, wherein the switch is activated when the light assembly is correctly positioned within the device. This switch arrangement provides for the interlocking of the device and light assembly. The switch may be a contact switch, a reed switch or any other known switch. Preferably the switch is connected to a relay which forms part of the electrical circuit supplying power to the light source, and therefore does not need to handle the currents and/or voltages required to power the light source.

In preferred embodiments, the light assembly includes a high-pressure or medium-pressure mercury vapour lamp as said light source. Mercury vapour discharge lamps provide for high intensity broad spectrum emission in the ultra-violet spectrum and so provide a significant number of photons which can be used by photochemical reactions.

The light source is preferably removable from the device so that it can be replaced or exchanged for an alternative light source.

The kit of this aspect may include some, all or none of the above optional and preferred features in any combination.

The kit of this aspect is preferably used in a method according to the third aspect of the invention described below, but is not limited to such use.

A third aspect of the present invention provides a method of carrying out a temperature-controlled photochemical flow reaction according to claim 12.

The separation of the reactor chamber from the lamp chamber means that separate cooling/temperature control processes can be implemented for each of these chambers. This can allow the temperature of the reactor chamber to be closely controlled to provide for the preferred reaction temperature, despite the close presence of the light source and the heat emitted from it. Preferably the temperature of the reactor chamber and the reactor can be controlled by controlling the air flow through the reactor chamber. At the same time a constant flow of cooling air can be passed through the lamp chamber to cool the light source and dissipate some of the heat emitted by the light source.

The method may further include the step of filtering the output of the light source.

The method of this aspect preferably uses the device of the above first aspect or the assembled kit of the above second aspect, including some all or none of the optional or preferred features of those aspects. However, it need not do so and can use alternative devices or reactors.

### BRIEF DESCRIPTION OF THE FIGURES

Embodiments of the present invention will now be described with reference to the accompanying drawings, in which:
Fig. 1 is a schematic diagram of a known batch photochemical reactor and has already been described;
Fig. 2 is a schematic diagram of a known flow photochemical reactor and has already been described;
Fig. 3 is an exploded view of a photochemical reactor according to an embodiment of the present invention; and
Fig. 4 is a sectional view of the photochemical reactor shown in Fig. 4.

### DETAILED DESCRIPTION

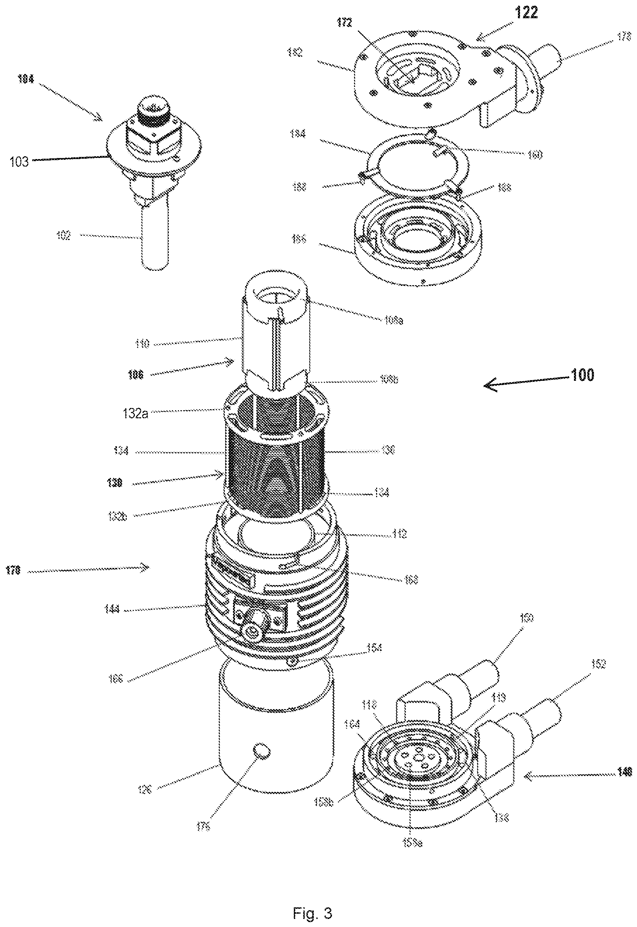

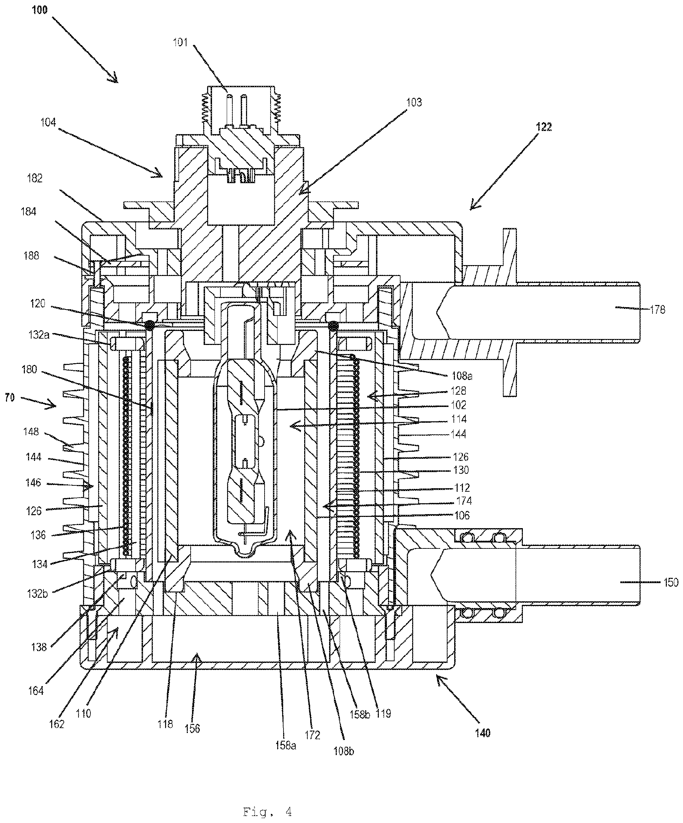

Fig. 3 is an exploded view of a photochemical reactor 100 according to an embodiment of the present invention. Fig. 4 shows a view of the photochemical reactor 100 in a section taken through the centre of the reactor 100.

The photochemical reactor 100 is made up of a number of generally concentrically arranged components which are shown in exploded form in Fig. 3. These components include: a lamp assembly 104, a lid section 122, a main body 170 and a baseplate 140. The main body 170 includes, from the centre outwards, the following components: a filter assembly 106, a first separator 112, a reactor unit 130, a second separator 126 and a casing 144.

When assembled (as shown in Fig. 4), the main body 170 is sandwiched between the baseplate 140 and lid section 122 and these components secured to each other, for example, by way of a screw fitting or locking mechanism. An example of such a locking mechanism is shown as slots 168 arranged around the top of the casing 144 which engage with pins (not shown) in the bottom of the lid section 122. The lamp assembly 104 can then be introduced into the reactor 100 through a central hole 172 in the lid section 122.

In the present embodiment, the photochemical reactor 100 has a lamp 102 for illuminating the reactants and causing the reaction to proceed. Specifically, the lamp 102 is a mercury vapour lamp. Mercury vapour lamps provide for broad spectrum light across the UV range (albeit with specific peak frequencies) and high intensities of radiation. However, the skilled person will appreciate that other light sources such as LEDs or fluorescent lamps can also be used.

The lamp 102 may be dimmable so that the intensity of the light emitted can be controlled, with a corresponding effect on the reaction rate.

The lamp assembly 104 of the present invention includes the lamp 102, a connector 101 for connecting the lamp to a ballast or other power supply (not shown) and a fitting 103. The fitting 103 has locking components which interlock with the lid section 122 and can be used to prevent illumination of the lamp 102 when the lamp is outside the reactor 100. This interlocking arrangement provides a safety arrangement as the intensity of a mercury vapour lamp can be hazardous to the human eye if viewed directly.

The interlocking is arranged such that power will only be supplied to the lamp 102 if the following conditions are met: a) the lamp fitting 103 is in-place within the lid section 122; and b) the lid section 122 is correctly located onto the casing 144. The correct condition is detected using a magnetic reed switch (not shown). The reed switch is embedded in the lamp assembly 104 and wired in series with a relay that switches mains power to the lamp power supply. The lid section 122 is assembled from three parts, an upper housing 182, a lower housing 186 and a floating plate 184 having three protruding pins 188. The floating plate 184 is spring loaded so that the three pins 188 protrude into a recess in the underside of the lower housing 186 into which the casing 144 locates.

The casing 144 is locked into the lid using a 10 degree rotation "bayonet-type" engagement in which pins (not shown) on the lower housing 186 of the lid section 122 engage with and lock into slots 168 in the casing 144. When the lid section 122 is fully engaged onto the casing 144, the three pins 188 attached to the floating plate 184 cause the floating plate to be lifted against the spring force. A magnet mounted on the floating plate 184 is thereby lifted into a position sufficiently close to the reed switch to actuate the switch. If either the lamp assembly 104 is not in-place or the lid section 122 is not fully engaged onto the casing 144 then power cannot be supplied to the lamp.

The lamp 102 may be replaced by another light source by removing the entire lamp assembly 104.

As can be seen in Fig. 4, when the reactor 100 is assembled, the first separator 112 divides the reactor main body 170 into a lamp chamber 114, in which the lamp 102 and filter assembly 106 are positioned and a reactor chamber 128 in which the reactor unit 130 is positioned. The first separator 112 is a hollow cylinder of quartz glass which has broad spectrum transmission characteristics and so does not significantly reduce the amount of radiation from the lamp 102 reaching the reactor unit 130.

The baseplate 140 has an annular rim 119 against which the base of the first separator 112 sits when the reactor is assembled. A circular seal 120 is provided in the underside of the lid section 122 and abuts the top surface of the first separator 112 when the reactor is assembled thereby forming a substantially or completely airtight seal between the lid section 122 and the separator, and consequently between the lamp chamber 114 and the reactor chamber 128.

The reactor chamber 128 surrounds the lamp chamber 114. When the reactor 100 is assembled, the reactor chamber 128 contains the reactor unit 130, which is disposed concentrically around the first separator 112. The reactor unit 130 does not make any physical contact with the outer surface of the first quartz-glass separator, however, so that the temperature of the reactor unit 130 is not affected by the temperature of the separator 112.

The reactor unit 130 consists of two annular frames 132a, 132b, a plurality of quartz glass supporting rods 134 extending between these frames, and a length of transparent or translucent FEP (fluorinated ethylene propylene) tubing 136 which is coiled into a helix supported by the quartz rods 134. The tubing 136 is connected to an input port (not shown) which allow the introduction of reagents into the reactor unit 130. The reagents flow through the tubing 136 and are exposed to radiation (in particular, for most reactions, ultra-violet light) from the lamp which drives or catalyses a desired reaction in the tubing. The reacted products then pass out of the tubing 136 through an output port (not shown),

The diameter of the tubing 136 can be chosen to be sufficiently small to ensure that any ultraviolet radiation incident upon the tubing is able to effect reactions at all points across the diameter, and not just near the inner edge. In the present embodiment, the total volume of the tubing in the reactor is 10ml, but 2ml, 5ml and 20ml reactors could also be used without difficulty.

The bottom circular frame 132b of the reactor unit 130 fits into an annular slot 138 in the baseplate 140. As with the lamp assembly 104, the reactor unit 130 can be easily removed and replaced with another reactor unit, e.g. if a different volume was required, or if the reactor unit were to become clogged by precipitate.

The outer perimeter of the reactor chamber 128 is formed by a second separator 126. As with the first separator 112, this separator is a hollow cylinder of quartz glass which has broad spectrum transmission characteristics and so does not significantly reduce the amount of radiation from the lamp passing through it. The second separator forms a pocket 146 between itself and an inner surface of the casing 144 of the reactor 100.

The casing 144 is made from metal, such as aluminium, and therefore absorbs a portion (preferably a substantial portion) of any infra-red radiation emitted from the lamp 102 and prevents it from being reflected back into the centre of the reactor 100. The absorption of this radiation will cause the casing 144 to heat up and act as a heat sink for the reactor 100. The outer surface of the casing 144 is provided with a plurality of fins 148. These fins increase the surface area of the casing 144, allowing it to dissipate the absorbed heat into the atmosphere at a small temperature difference.

The inner surface of the casing is shiny in order to reflect a substantial portion of the useful radiation (typically the ultra-violet and visible light) back into the reactor, thereby causing it to pass through the reactor unit 130 again (and indeed may do so several times until it is absorbed).

The inner surface of the casing may have a coating (not shown) which selective reflects/absorbs radiation in particular wavelength ranges. In one embodiment the inner surface of the casing is coated using a dichoric aluminium sheet of approximately 0.3 mm thickness that is bonded to an aluminium casing 144. One such dichoric coated aluminium sheet is supplied by Deposition Sciences Inc. of Santa Rosa, California and is produced by reactive metal oxide sputtering for enhanced optical performance and durability.

The pocket 146 provides an insulating layer of gas between the casing 144 and the second separator 126, thereby insulating the reactor chamber 128 and, as a result, the tubing 136 and the reactants inside it from the heat of the casing 144, which acts as a heat sink.

The second separator 126 does not necessarily separate the reactor chamber 128 from the pocket 146 in an airtight manner, but the second separator 126 can be made to fit snugly within the casing 144, such that there is very little airflow between the pocket 146 and the reactor chamber 128.

The filter assembly 106 is made up of two annular frames 108a, 108b, into which four flat filters 110 are fixed. Generally it is much easier to machine flat filters than curved filters, and the inventors of the present application have found that a configuration of four flat filters as shown achieves approximately 95% of the filtering effect of a cylindrical filter. Since filters are rarely perfect in their transmission (or absorption) spectrum, this efficiency is acceptable for the purposes of almost all reactions.

The filter assembly 106 is removable from the reactor main body 170 and interchangeable with other filter assemblies having different filters. Indeed the filter assembly 106 need not be present at all where the unfiltered spectrum of the lamp is acceptable for the reaction being conducted.

The baseplate 140 has an annular slot 118 in which the lower circular frame 108b of the filter assembly 106 can rest. The filter assembly 106 is positioned inside the lamp chamber so that any heat retained by the filters 110 (e.g. from the absorption of infra-red radiation) can be cooled along with the lamp and does not affect the temperature of the reactor chamber.

The photochemical reactor 100 has three gas inlets which feed into the lamp chamber 114 and the reactor chamber 128: a first gas inlet 150, a second gas inlet 152, and a third gas inlet 154.

The first gas inlet 150 can be connected to an external source of gas (not shown). Gas which enters the photochemical reactor 100 via this first gas inlet 150 enters a cylindrical cavity 156 situated in the centre of the baseplate 140 beneath the lamp chamber 114. Baseplate 140 has a plurality of ports 158a, 158b through which gas from cylindrical cavity 156 can flow into the lamp chamber 114.

When the filter assembly 106 is in place, the lamp chamber 114 is divided into two sub-regions, a central cylindrical portion 172 inside the filter assembly 106 which houses the lamp assembly 104 and an annular portion 174 outside the filter assembly 106. The ports 158a, 158b are arranged in two rings; the inner ring of ports 158a allow cooling gas to flow from the cylindrical cavity 156 to the central cylindrical portion 172 of the lamp chamber 114 inside the filter assembly 106. The outer ring of ports 158b allow gas to flow from the cylindrical cavity 156 to the annular portion 174 of the lamp chamber 114 outside the filter assembly 106. This allows both sides of the flat filters 110 to be cooled at the same time thus keeping them at the same temperature and avoiding thermal stress in the filters. Gas which leaves the lamp chamber 114 does so through the first gas outlet, which is then released into the atmosphere via an exhaust outlet in the lid section 122.

The second gas inlet 152 can be connected to a second external source of gas (not shown). Gas which enters the photochemical reactor 100 via this second gas inlet 152 enters an annular cavity 162 in the baseplate 140 beneath the reactor chamber 128. Baseplate 140 has a plurality of ports 164 through which gas from the annular cavity 162 can flow into the reactor chamber 128. Gas from the reactor chamber 128 exits the reactor chamber 128 via the second gas outlet 178.

The temperature of the gas, or the volume of the gas, which enters the reactor chamber 128, and heats or cools the reactor unit 130 can be carefully controlled in order to provide the correct reaction conditions for the reaction taking place within the tubing 136. A temperature sensor (not shown) is positioned in contact with the outer surface of the tubing 136 to provide an accurate temperature reading of the tubing (and therefore the reagents/reaction products inside it). The temperature sensor (and it connections) passes through a sealed aperture 166 in the casing 144, through a hole 176 in the second separator 126 and into the reactor chamber 128. The readings from the temperature sensor are fed back to a controller which is arranged to control the temperature and/or volume of gas flow through the reactor chamber 128 and thereby accurately maintain the temperature of the reactants within a desired range or at a desired temperature.

As the temperature sensor may also be exposed to radiation directly received from the lamp 102. This may lead to inaccurate temperature measurements as such radiation may cause increased temperature to be sensed by the sensor, or the radiation may cause the sensor to "white-out" and provide temperature measurements which are off the scale expected.

To address this, the reactor 100 includes a shield 180 which blocks direct radiation from the lamp 102 from reaching the temperature sensor. The shield 180 is provided as a small metallic dot (in the present embodiment, the dot is circular, but other shapes could be used) on the internal surface of the first separator 112. As the contact tip of the temperature sensor is very small in cross-section in relation to the reactor 100 as a whole, the shield 180 can be correspondingly small, such that it has very little effect on the total radiation reaching the reactor unit 130 from the lamp 102.

In an alternative embodiment, which is not shown in the Figures, the shield 180 could be a small metallic element which is supported in the desired position inside the lamp chamber 114 on a stem mounted on the baseplate.

A further aperture or port (not shown) may be provided to allow for a spectrometer connected to a fibre optic cable to be inserted into the reactor chamber 128 in order to measure and analyse the spectral transmittance (or absorption) by any one of the lamp 102, the filters 110, the reactor tubing 136 and any reagents in the reactor tubing. The provision of a spectrometer which can measure the spectral transmittance in real time can allow for an improved understanding of the photochemical reaction conditions in the reactor and, if necessary, adjustments to those conditions. A suitable spectrometer is manufacturer by BWTEK Inc. and is a CCD spectrometer sold as the Exempler^{™}.

If the gas passing through the reactor chamber 128 is being used to heat the chamber and the reactor unit 130, it is preferably recycled through a heating system so that the residual heat in the exhaust gas is not wasted.

Due to the configuration of the reactor 100 with the first separator 112 forming an airtight division between the lamp chamber 114 and the reactor chamber 128, two separate cooling circuits are created which are fed by, respectively, the first and second gas inlets 150, 152. Accordingly, the temperature of the reactor chamber (and therefore of the tubing 136 in which the reaction is taking place) can be separately controlled from the temperature of the lamp chamber.

Furthermore, due to the separation of the lamp chamber 114 and the reactor chamber 128, very little heat is conducted from the lamp 102 to the reactor chamber 128, and only radiant heat affects the temperature of the reactor chamber. Most of the radiant heat emitted by the lamp 102 can be absorbed by either a suitable filter 106 or alternatively absorbed by the casing 144 and then dissipated to the exterior. The air pocket 146 and the second separator 126 insulate the casing 144 from the reactor chamber.

The photochemical reactor 100 is preferably adapted for use with a flow chemistry system, such as the E-Series or R-Series systems provided by the applicant, and the gas inlets 150, 152 and the second gas outlet 178 are preferably adapted to engage with the ports on that system.

For many reactions, the third gas inlet 154 is not used. However, if it is desired to carry out a reaction which requires a temperature lower than ambient, the third gas inlet 154 can be connected to a chilled gas supply (not shown). In this case, the third gas inlet 154 is connected instead of the second gas inlet 152 (and a valve may be used to close off the second gas inlet). Gas entering through the third gas inlet 154 enters the annular cavity 162 and then the reactor chamber 128 via the ports 164.

The inventors have found that a reactor according to the embodiment described is approximately as efficient (in terms of grams of reaction product per 100W of power input) as prior art reactors such as those described above having reactor volumes up to 20 times greater. Accordingly, a reactor according to the embodiment described can be made significantly more compact than the known reactors, and also results in less wastage of unreacted reactants and start-up/run-off volumes to initiate and clean the reactor.

## Claims

1. A device for carrying out a temperature-controlled photochemical reaction, said device including:
a lamp chamber (114) including a light source (102) and having a first gas inlet (150) and a first gas outlet for respectively feeding gas into and out of the lamp chamber (114);
a reactor chamber (128) having a second gas inlet (152) and a second gas outlet (178), which are independent from the first gas inlet and the first gas outlet, for respectively feeding gas into and out of the reactor chamber (128), and a reactor unit (130), the reactor unit (130) including a reactor (136) in the form of a tube made from a material that permits the transmission of at least a portion of the ultraviolet or visible spectrum of radiation, an input port and an output port;
a first separator (112) made from a material that permits the transmission of at least a portion of the ultraviolet or visible spectrum of radiation and separating the lamp chamber (114) and the reactor chamber (128) in an airtight manner; and
a temperature sensor, arranged to measure the temperature of the reactor;
wherein the reactor chamber (128) surrounds the lamp chamber (114) and the reactor (136) is disposed concentrically around the first separator and does not make contact with an outer surface of the first separator (112).

2. A device according to claim 1 wherein the device is arranged such that the gas flows through the lamp chamber (114) and the reactor chamber (128) do not mix at any point in the device.

3. A device according to claim 1 or claim 2 wherein said reactor unit (130) is removable from the reactor chamber (128).

4. A device according to any one of the previous claims, further including a removable filter assembly (106) having a least one filter element (110), and wherein
the first gas inlet (150) includes a plurality of ports (158a, 158b) such that, when said removable filter assembly (106) is present, gas which is fed into the lamp chamber (114) is fed by said ports (158a, 158b) into regions on both sides of said filter element (110).

5. A device according to claim 4 wherein the removable filter assembly (106) includes at least three planar filter elements (110) disposed so as to form a cage which is arranged to surround the light source (102).

6. A device according to any one of the previous claims, wherein the device also includes a casing (144), wherein the inner surface of the casing (144) is substantially reflective to ultraviolet radiation and, preferably, substantially absorptive of visible and infra-red radiation.

7. A device according to claim 6, wherein the device also includes:
a translucent second separator (126) which is arranged to form a pocket (146) between said second separator (126) and the casing (144),
wherein the second separator (126) is situated between the reactor chamber (128) and the casing (144).

8. A device according to any one of the previous claims, wherein the device also includes a shield (180) arranged to block at least some of the radiation from the light source (102) from reaching the temperature sensor.

9. A device according to any one of the previous claims, wherein the device also includes a spectrometer arranged to measure the real-time spectral transmittance of one or more of the light source (102), the filter assembly (106), the reactor (136) and reagents in the reactor (136), when those elements are present in the device.

10. A device according to any one of the previous claims further including a light assembly (104) housing said light source (102), wherein the device and the light assembly (104) are arranged to interlock such that power can only be supplied to the light source (102) if the light assembly (104) is correctly positioned within the device.

11. A device according to claim 10 wherein the light assembly (104) has a switch controlling the light source (102), wherein the switch is activated when the light assembly (104) is correctly positioned within the device.

12. A method of carrying out a temperature-controlled photochemical flow reaction, the method including the steps of:
passing one or more reactants for said photochemical reaction through a tube reactor (136), made from a material that permits the transmission of at least a portion of the ultraviolet or visible spectrum of radiation, in a reactor chamber (128), arranged to lie radially outside a light source (102) in a lamp chamber (114);
illuminating said reactor (136) with a light source (102) arranged in a lamp chamber (114) which is separated from said reactor chamber (128) in an airtight manner by a separator (112), made from a material that permits the transmission of at least a portion of the ultraviolet or visible spectrum of radiation, wherein the reactor (136) is disposed concentrically around the separator and does not make contact with an outer surface of the first separator (112);
cooling said lamp chamber (114) by passing gas through the lamp chamber (114); monitoring the temperature of the reactor (136) using a temperature sensor; and
controlling the temperature of the reactor (136), independently of the cooling of the lamp chamber, by passing gas through the reactor chamber (128) and adjusting the temperature or flow rate of said gas.

## Patentansprüche

1. Vorrichtung zur Durchführung einer temperaturgesteuerten photochemischen Reaktion, wobei die Vorrichtung Folgendes umfasst:
eine Lampenkammer (114), die eine Lichtquelle (102) umfasst und einen ersten Gaseinlass (150) und einen ersten Gasauslass aufweist, um Gas in die Lampenkammer (114) hinein- und aus dieser herauszuleiten;
eine Reaktorkammer (128) mit einem zweiten Gaseinlass (152) und einem zweiten Gasauslass (178), die unabhängig von dem ersten Gaseinlass und dem ersten Gasauslass sind, um Gas in die Reaktorkammer (128) hinein- und aus dieser herauszuleiten, und eine Reaktoreinheit (130), wobei die Reaktoreinheit (130) einen Reaktor (136) in Form eines Rohrs aus einem Material umfasst, das die Übertragung von mindestens einem Teil des ultravioletten oder sichtbaren Strahlungsspektrums erlaubt, eine Eingangsöffnung und eine Ausgangsöffnung;
ein erstes Trennelement (112), das aus einem Material hergestellt ist, das die Übertragung von zumindest einem Teil des ultravioletten oder sichtbaren Strahlungsspektrums ermöglicht und das die Lampenkammer (114) und die Reaktorkammer (128) luftdicht trennt; und
einen Temperatursensor, der dafür ausgelegt ist, die Temperatur des Reaktors zu messen;
wobei die Reaktorkammer (128) die Lampenkammer (114) umgibt und der Reaktor (136) konzentrisch um den ersten Separator herum angeordnet ist und keinen Kontakt mit einer Außenfläche des ersten Separators (112) hat.

2. Vorrichtung nach Anspruch 1, wobei die Vorrichtung so ausgelegt ist, dass sich die Gasströme durch die Lampenkammer (114) und die Reaktorkammer (128) an keiner Stelle in der Vorrichtung vermischen.

3. Vorrichtung nach Anspruch 1 oder Anspruch 2, wobei die Reaktoreinheit (130) von der Reaktorkammer (128) abnehmbar ist.

4. Vorrichtung nach einem der vorhergehenden Ansprüche, die ferner eine abnehmbare Filterbaugruppe (106) mit mindestens einem Filterelement (110) umfasst, und wobei
der erste Gaseinlass (150) eine Vielzahl von Öffnungen (158a, 158b) aufweist, so dass, wenn die entfernbare Filteranordnung (106) vorhanden ist, Gas, das in die Lampenkammer (114) geleitet wird, durch die Öffnungen (158a, 158b) in Bereiche auf beiden Seiten des Filterelements (110) geleitet wird.

5. Vorrichtung nach Anspruch 4, wobei die abnehmbare Filteranordnung (106) mindestens drei planare Filterelemente (110) umfasst, die so angeordnet sind, dass sie einen Käfig bilden, der dafür ausgelegt ist, die Lichtquelle (102) zu umgeben.

6. Vorrichtung nach einem der vorhergehenden Ansprüche, wobei die Vorrichtung darüber hinaus ein Gehäuse (144) umfasst, wobei die Innenfläche des Gehäuses (144) im Wesentlichen für ultraviolette Strahlung reflektierend und vorzugsweise im Wesentlichen für sichtbare und infrarote Strahlung absorbierend ist.

7. Vorrichtung nach Anspruch 6, wobei die Vorrichtung darüber hinaus Folgendes umfasst:
einen lichtdurchlässigen zweiten Separator (126), der dafür ausgelegt ist, eine Tasche (146) zwischen dem zweiten Separator (126) und dem Gehäuse (144) zu bilden,
wobei der zweite Separator (126) zwischen der Reaktorkammer (128) und dem Gehäuse (144) angeordnet ist.

8. Vorrichtung nach einem der vorhergehenden Ansprüche, wobei die Vorrichtung darüber hinaus eine Abschirmung (180) umfasst, die dafür ausgelegt ist, zumindest einen Teil der Strahlung von der Lichtquelle (102) davon abzuhalten, den Temperatursensor zu erreichen.

9. Vorrichtung nach einem der vorhergehenden Ansprüche, wobei die Vorrichtung darüber hinaus ein Spektrometer umfasst, das dafür ausgelegt ist, in Echtzeit den spektralen Transmissionsgrad der Lichtquelle (102), der Filteranordnung (106), des Reaktors (136) und der Reagenzien im Reaktor (136) zu messen, wenn diese Elemente in der Vorrichtung vorhanden sind.

10. Vorrichtung nach einem der vorhergehenden Ansprüche, die ferner eine Lichtanordnung (104) umfasst, in der die Lichtquelle (102) untergebracht ist, wobei die Vorrichtung und die Lichtbaugruppe (104) dafür ausgelegt sind, sich gegenseitig zu verriegeln, so dass die Lichtquelle (102) nur mit Strom versorgt werden kann, wenn die Lichtbaugruppe (104) korrekt in der Vorrichtung positioniert ist.

11. Vorrichtung nach Anspruch 10, wobei die Lichtbaugruppe (104) einen Schalter aufweist, der die Lichtquelle (102) steuert, wobei der Schalter aktiviert wird, wenn die Lichtbaugruppe (104) korrekt in der Vorrichtung positioniert ist.

12. Verfahren zur Durchführung einer temperaturgesteuerten photochemischen Strömungsreaktion, wobei das Verfahren folgende Schritte umfasst:
Durchleiten eines oder mehrerer Reaktanten für die photochemische Reaktion durch einen Rohrreaktor (136), der aus einem Material hergestellt ist, das die Übertragung von zumindest einem Teil des ultravioletten oder sichtbaren Strahlungsspektrums ermöglicht, in eine Reaktorkammer (128), die radial außerhalb einer Lichtquelle (102) in einer Lampenkammer (114) angeordnet ist;
Beleuchten des Reaktors (136) mit einer Lichtquelle (102), die in einer Lampenkammer (114) angeordnet ist, die von der Reaktorkammer (128) durch einen Separator (112) luftdicht getrennt ist, der aus einem Material hergestellt ist, das die Übertragung von zumindest einem Teil des ultravioletten oder sichtbaren Strahlungsspektrums ermöglicht, wobei der Reaktor (136) konzentrisch um den Separator herum angeordnet ist und keinen Kontakt mit einer Außenfläche des ersten Separators (112) hat;
Kühlen der Lampenkammer (114) durch Durchleiten von Gas durch die Lampenkammer (114);
Überwachen der Temperatur des Reaktors (136) unter Verwendung eines Temperatursensors; und
Steuern der Temperatur des Reaktors (136), unabhängig von der Kühlung der Lampenkammer, durch Durchleiten von Gas durch die Reaktorkammer (128) und Einstellen der Temperatur oder der Durchflussmenge des Gases.

## Revendications

1. Dispositif pour effectuer une réaction photochimique à température contrôlée, ledit dispositif comprenant :
une chambre de lampe (114) comprenant une source de lumière (102) et ayant une première entrée de gaz (150) et une première sortie de gaz pour l'alimentation respective en gaz dans et hors de la chambre de lampe (114) ;
une chambre de réacteur (128) ayant une seconde entrée de gaz (152) et une seconde sortie de gaz (178), qui sont indépendantes de la première entrée de gaz et de la première sortie de gaz, pour l'alimentation respective en gaz dans et hors de la chambre de réacteur (128), et une unité de réacteur (130), l'unité de réacteur (130) comprenant un réacteur (136) sous la forme d'un tube réalisé à partir d'un matériau qui permet la transmission d'au moins une partie du spectre de rayonnement ultraviolet ou visible, un port d'entrée et un port de sortie ;
un premier séparateur (112) fait d'un matériau qui permet la transmission d'au moins une partie du spectre de rayonnement ultraviolet ou visible et séparant la chambre de lampe (114) et la chambre de réacteur (128) de manière étanche à l'air ; et
un capteur de température, agencé pour mesurer la température du réacteur ;
dans lequel la chambre de réacteur (128) entoure la chambre de lampe (114) et le réacteur (136) est disposé concentriquement autour du premier séparateur et n'entre pas en contact avec une surface extérieure du premier séparateur (112).

2. Dispositif selon la revendication 1, dans lequel le dispositif est agencé de sorte que les flux de gaz à travers la chambre de lampe (114) et la chambre de réacteur (128) ne se mélangent en aucun point du dispositif.

3. Dispositif selon la revendication 1 ou 2, dans lequel ladite unité de réacteur (130) est amovible de la chambre de réacteur (128).

4. Dispositif selon l'une quelconque des revendications précédentes, comprenant en outre un ensemble de filtre amovible (106) ayant au moins un élément de filtre (110), et dans lequel la première entrée de gaz (150) comprend une pluralité d'orifices (158a, 158b) de sorte que, lorsque ledit ensemble de filtre amovible (106) est présent, le gaz qui est alimenté dans la chambre de lampe (114) est alimenté par lesdits orifices (158a, 158b) dans des régions sur les deux côtés dudit élément de filtre (110).

5. Dispositif selon la revendication 4, dans lequel l'ensemble de filtre amovible (106) comprend au moins trois éléments de filtre plans (110) disposés de manière à former une cage qui est agencée pour entourer la source de lumière (102).

6. Dispositif selon l'une quelconque des revendications précédentes, dans lequel le dispositif comprend également un boîtier (144), dans lequel la surface interne du boîtier (144) est sensiblement réfléchissante au rayonnement ultraviolet et, de préférence, sensiblement absorbante du rayonnement visible et infrarouge.

7. Dispositif selon la revendication 6, dans lequel le dispositif comprend également :
un deuxième séparateur translucide (126) qui est agencé pour former une poche (146) entre ledit deuxième séparateur (126) et le boîtier (144),
dans lequel le deuxième séparateur (126) est situé entre la chambre de réacteur (128) et le boîtier (144).

8. Dispositif selon l'une quelconque des revendications précédentes, dans lequel le dispositif comprend également un écran (180) agencé pour empêcher au moins une partie du rayonnement provenant de la source de lumière (102) d'atteindre le capteur de température.

9. Dispositif selon l'une quelconque des revendications précédentes, dans lequel le dispositif comprend également un spectromètre agencé pour mesurer la transmittance spectrale en temps réel de l'un ou plusieurs parmi la source de lumière (102), l'ensemble de filtre (106), le réacteur (136) et les réactifs dans le réacteur (136), lorsque ces éléments sont présents dans le dispositif.

10. Dispositif selon l'une quelconque des revendications précédentes, comprenant en outre un ensemble de lumière (104) logeant ladite source de lumière (102), dans lequel le dispositif et l'ensemble de lumière (104) sont agencés pour s'interverrouiller de sorte que l'alimentation ne peut être fournie qu'à la source de lumière (102) si l'ensemble de lumière (104) est correctement positionné à l'intérieur du dispositif.

11. Dispositif selon la revendication 10, dans lequel l'ensemble de lumière (104) comporte un interrupteur commandant la source de lumière (102), dans lequel l'interrupteur est activé lorsque l'ensemble de lumière (104) est correctement positionné à l'intérieur du dispositif.

12. Procédé de réalisation d'une réaction de flux photochimique à température contrôlée, le procédé comprenant les étapes consistant à :
faire passer un ou plusieurs réactifs pour ladite réaction photochimique à travers un réacteur tubulaire (136), fait d'un matériau qui permet la transmission d'au moins une partie du spectre de rayonnement ultraviolet ou visible, dans une chambre de réacteur (128), agencée pour se situer radialement à l'extérieur d'une source de lumière (102) dans une chambre de lampe (114) ;
éclairer ledit réacteur (136) avec une source de lumière (102) agencée dans une chambre de lampe (114) qui est séparée de ladite chambre de réacteur (128) de manière étanche à l'air par un séparateur (112), fait d'un matériau qui permet la transmission d'au moins une partie du spectre de rayonnement ultraviolet ou visible, dans lequel le réacteur (136) est disposé concentriquement autour du séparateur et n'entre pas en contact avec une surface extérieure du premier séparateur (112) ;
refroidir ladite chambre de lampe (114) en faisant passer du gaz à travers la chambre de lampe (114) ;
surveiller la température du réacteur (136) en utilisant un capteur de température ; et
contrôler la température du réacteur (136), indépendamment du refroidissement de la chambre de lampe, en faisant passer du gaz à travers la chambre de réacteur (128) et en ajustant la température ou le débit dudit gaz.
